## Europäisches Patentamt

## European Patent Office

## Office européen des brevets

(19)

(11) Veröffentlichungsnummer: **0 227 873**
**B1**

(12) **EUROPÄISCHE PATENTSCHRIFT**

(45) Veröffentlichungstag der Patentschrift:
**03.05.89**

(51) Int. Cl.⁴: **F16K 5/06**

(21) Anmeldenummer: **86100027.1**

(22) Anmeldetag: **02.01.86**

(54) **Hahn mit kugelförmigem Küken.**

(43) Veröffentlichungstag der Anmeldung:
**08.07.87 Patentblatt 87/28**

(45) Bekanntmachung des Hinweises auf die Patenterteilung:
**03.05.89 Patentblatt 89/18**

(84) Benannte Vertragsstaaten:
**AT BE CH DE FR GB IT LI LU NL SE**

(56) Entgegenhaltungen:
**DE-A- 2 342 069**
**FR-A- 2 454 571**

(73) Patentinhaber: **Hartmann, Werner, Dipl.-Ing., Am Hütteberg 8, D-3167 Burgdorf-Ehlershausen(DE)**

(72) Erfinder: **Hartmann, Werner, Dipl.-Ing., Am Hütteberg 8, D-3167 Burgdorf-Ehlershausen(DE)**

(74) Vertreter: **Thömen, Uwe, Dipl.-Ing., Patentanwalt U. Thömen Zeppelinstrasse 5, D-3000 Hannover 1(DE)**

## Beschreibung

Die Erfindung liegt die Aufgabe zugrunde, einen besonders einfach ausgebildeten Hahn mit kugelförmigem Küken für Rohrleitungen zu schaffen, die hohem Druck ausgesetzt sind. Der hohe Druck erfordert, daß das Küken mit zwei Achszapfen versehen ist, die in entsprechende Achslager des Gehäuses eingreifen.

Der erfindungsgemäße Hahn geht von einer im Oberbegriff des Patentanspruches 1 erwähnten, in der DE-AS 2 342 069 beschriebenen Bauweise aus, bei der zum Ausbau des Kükens der obere Achszapfen des Kükens – senkrecht aus seinem Lager nach unten verschoben – durch die Kükendurchgangsöffnung hindurch ausbaubar ist. Der untere Achszapfen kann bei dieser bekannten Anordnung nur dadurch ausgebaut werden, daß das Küken zur Freigabe des unteren Achszapfens senkrecht gehoben wird. Bei der bekannten Anordnung ist die vertikale Lage des Kükens in üblicher Weise durch die Achszapfenlagerung bestimmt; falls sich diese durch eine starke Beanspruchung durch das Medium oder durch Herstellungstoleranzen ändert, liegen die Dichtringe der Sitzringe nicht mehr korrekt auf der Kükenoberfläche auf, was zu Undichtigkeiten führt. Dieser Nachteil wird durch die erfindungsgemäße Anordnung nach Patentanspruch 1 vermieden.

Ein Ausführungsbeispiel der Erfindung ist in den Figuren 1–3 dargestellt.

Fig. 1 zeigt einen Schnitt durch den erfindungsgemäßen Hahn, der durch die Achse (A–A) der Rohrleitung und die Achse (B–B) des Kükens geführt ist,

Fig. 2 einen Schnitt durch die Achse (B–B) des Kükens mit halb eingesetztem oberen Zapfen und

Fig. 3 einen Schnitt durch die Achse (B–B) des Kükens mit eingesetztem oberen und halb eingesetztem unteren Zapfen.

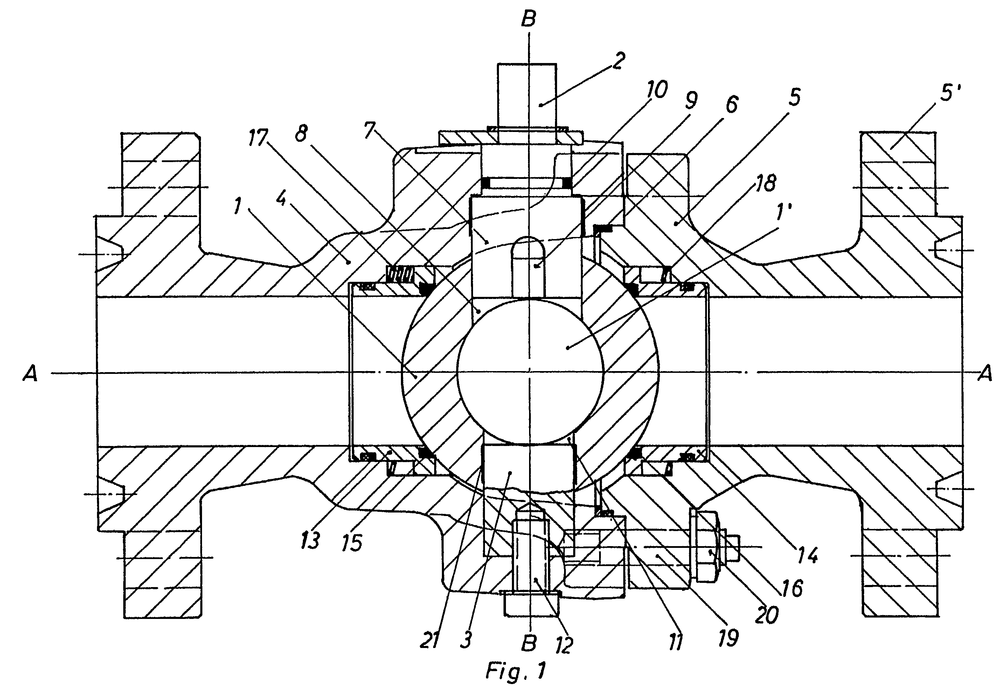

Wie sich aus Fig. 1 ergibt, ist das Küken 1 mit seinen oberen und unteren Achszapfen 2 und 3 im – größeren – linken Teil 4 des Gehäuses gelagert, an den sich der deckelartige kleinere Teil 5 des Gehäuses anschließt.

Die Gehäuseteile 4 und 5 berühren sich in einer parallel zur Achse B–B des Kükens 1 und senkrecht zur Rohrachse A–A orientierten Fläche 6. Der obere Achszapfen 2 durchsetzt mit seinem unteren Ende die Bohrung 8 im oberen Teil des Kükens 1. Die Verbindung zwischen dem oberen Achszapfen 2 mit dem Küken 1 wird durch die Paßfeder 9 gesichert, die einerseits in eine Nut im unteren Ende 7 des Achszapfens 2 und andererseits in eine entsprechende Nut in der Oberfläche der Bohrung 8 im Küken 1 eingelassen ist. Der obere Achszapfen 2 ist mit einem Dichtungsring 10 zur Abdichtung gegen das Gehäuse und in seinem oberen Ende mit Schlüsselflächen zur Betätigung durch einen Schlüssel versehen.

Der untere Achszapfen 3 greift mit seinem oberen Teil in die untere Bohrung 11 des Kükens 1 ein unter Zulassung einer Drehung zwischen dem Küken 1 und dem Achszapfen 3. In den unteren Teil des Achszapfens 3 greift eine den Gehäuseteil 4 durchsetzende Gewindeschraube 12 zur Festlegung des Achszapfens 3 im Gehäuse 4 ein. Zur Lagerung ist zwischen dem oberen Ende des Zapfens 3 und der unteren Bohrung 11 im Küken eine Folie 21 angeordnet.

Die Abdichtung des Kükens 1 gegen die Rohrleitung erfolgt durch die Sitzringe 13 und 14 mittels der Dichtungsringe 15 und 16 auf den Sitzringen 13 und 14. Dem Andruck der Sitzringe 13 und 14 an das Küken dienen die Schraubenfedern 17 und 18.

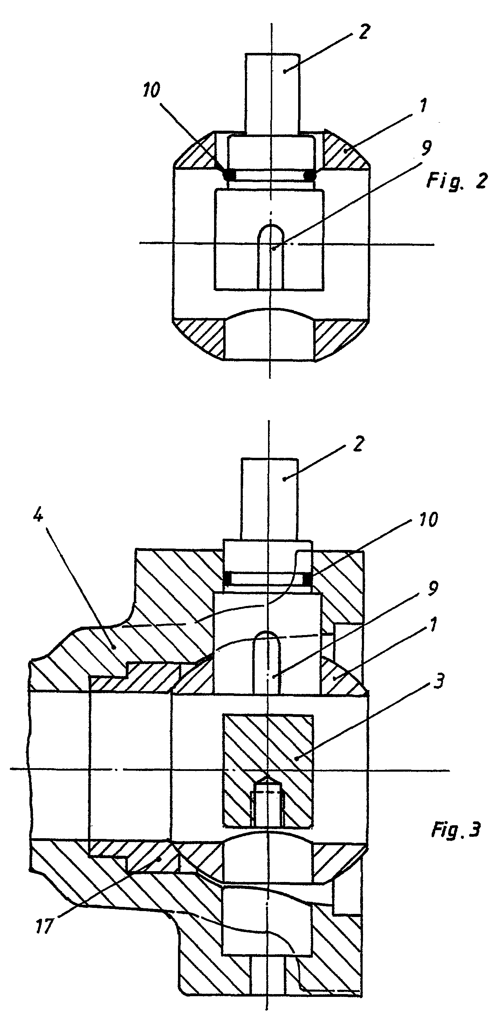

In Fig. 1 ist der Hahn in betriebsmäßigem Zustand dargestellt. Soll der Hahn z.B. zur Auswechselung der Dichtungsringe 15 und 16 geöffnet werden, so werden zunächst nach dem Ausbau des Hahnes aus der Rohrleitung die Schrauben 19 mit den Muttern 20 herausgenommen und dann der Gehäusedeckel 5 zusammen mit dem Sitzring 14 ausgebaut. Zusammen mit der Paßfeder 9 wird der obere Achszapfen 2 nach unten geschoben (vergl. Fig. 2) und unter Drehung in die horizontale Lage aus dem Küken 1 durch die Kükendurchgangsbohrung 1' herausgenommen. Der untere Achszapfen 3 wird nach dem Herausdrehen der Gewindeschraube 12 nach oben bewegt (Fig. 3) und ebenfalls durch die Kükendurchgangsbohrung 1' aus dem Küken 1 herausgenommen. Das Herausnehmen der beiden Achszapfen kann auch in umgekehrter Reihenfolge erfolgen, wie Fig. 3 erkennen läßt. Durch die Herausnahme der Achszapfen ist der Weg für den Ausbau des Kükens 1 und des Sitzringes 13 frei.

## Patentansprüche

1) Hahn mit kugelförmigem, mit zwei Achszapfen (2, 3) versehenen Küken (1), der folgende Merkmale aufweist:
– der obere Achszapfen (2) ist durch die Kükendurchgangsbohrung (1') hindurch bei geöffnetem Hahngehäuse (4) ausbaubar,
– zur Öffnung des Hahngehäuses (4) ist ein Deckel (5) vorgesehen, der einen Flansch (5') trägt,
– die Öffnungsebene verläuft senkrecht zur Rohrachse (A–A) in einem solchen Abstand von der Kükenachse (B–B), daß im Hahngehäuse Platz für die Lager der Achszapfen (2, 3) verbleibt, dadurch gekennzeichnet, daß beide Achszapfen (2, 3) im Küken (1) in Richtung der senkrechten Achse (B–B) des Kükens (1) verschiebbar derart gelagert sind, daß die Zentrierung der horizontalen Achse (A–A) des Küken (1) durch die Sitzringe (13, 14) erfolgt,

2) Hahn nach Anspruch 1, dadurch gekennzeichnet, daß der untere Achszapfen (3) im Küken (1) drehbar gelagert und nach Art des oberen Achszapfens (2) ausbaubar ist,

3) Hahn nach Anspruch 1, dadurch gekennzeichnet, daß der untere Achszapfen (3) mit dem Gehäuse (4) durch eine Schraube (12) lösbar verbunden ist, die koachsial zum unteren Achszapfen (3) das Gehäuse (4) durchsetzt,

4) Hahn nach Anspruch 1, dadurch gekennzeichnet, daß der zweite Sitzring (13) unmittelbar in das Gehäuse (4) eingebaut ist.

**Claims**

1. Valve with spherical plug (1), provided with two axle journals (2, 3), which possesses the following features:
   - the upper axle journal (2) can be removed through the through bore (1') of the plug when the valve casing (4) is open,
   - for opening the valve casing (4), a lid (5) is provided, which carries a flange (5'),
   - the opening plane extends perpendicularly to the pipe axis (A–A) at such a distance from the plug axis (B–B) that sufficient room remains in the valve casing for the bearings of the axle journals (2, 3), characterized in that both the axle journals (2, 3) are so mounted in the plug (1) slidably in the direction of the vertical axis (B–B) of the plug (1) that the centering of the horizontal axis (A–A) of the plug (1) is effected by the seating rings (13, 14).

2. Valve according to claim 1, characterized in that the lower axle journal (3) is rotatably mounted in the plug (1) and can be removed in the manner of the upper axle journal (2).

3. Valve according to claim 1, characterized in that the lower axle journal (3) is releasably connected with the casing (4) by a screw (12) which passes through the casing (4) coaxially to the lower axle journal (3).

4. Valve according to claim 1, characterized in that the second seating ring (13) is installed directly in the casing (4).

**Revendications**

1. Robinet à boisseaux sphériques (1), pourvus de deux tourillons (2, 3), présentant les caractéristiques suivantes:
   - le tourillon supérieur (2) peut être démonté en le passant à travers le trou de passage du boisseau (1'), le corps de robinet (4) étant ouvert,
   - un couvercle (5), pourvu d'une bride (5'), est prévu pour l'ouverture du corps de robinet (4),
   - le plan d'ouverture est perpendiculaire à l'axe de tube (A–A), à une distance telle de l'axe (B–B) du boisseau qu'il reste de la place dans le corps de robinet pour les paliers des tourillons (2, 3), caractérisé en ce que les deux tourillons (2, 3) peuvent, montés, être déplacé dans le boisseau (1), dans le sens de l'axe perpendiculaire (B–B) du boisseau (1) étant réalisé par l'intermédiaire des baques de siège (13, 14).

2. Robinet suivant la revendication 1, caractérisé en ce que le tourillon inférieur (3) peut, monté, tourner dans le boisseau (1) et peut être démonté de la même manière que le tourillon supérieur (2).

3. Robinet suivant la revendication 1, caractérisé en ce que le tourillon inférieur (3) est relié au corps (4) coaxialement au tourillon inférieur (3).

4. Robinet suivant la revendication 1, caractérisé en ce que la seconde bague d'appui (13) est directement incorporée dans le corps (4).

Fig. 1

EP 0 227 873 B1

Fig. 2

Fig. 3